# EUROPEAN PATENT APPLICATION

(11) **EP 1 371 975 A1**
(43) Date of publication of application: **17.12.2003**
(21) Application number: 02077324.8
(22) Date of filing: 13.06.2002
(51) Int. Cl.: G01N 27/447

(54) **Electrophoretic apparatus with protection for its detectors**

(71) Applicant: STICHTING VOOR DE TECHNISCHE WETENSCHAPPEN, 3527 JP Utrecht (NL)
(72) Inventor: Bastemeijer, Jeroen, 3201 CJ Spijkenisse (NL); Laugere, Frederic Pierre Jacques, 3531 TB Utrecht (NL); Bossche, Adrianus, 2909 PA Capelle a/d Ijssel (NL)
(74) Representative: van Westenbrugge, Andries

(57) **Abstract**

Electrophoretic system having a separation system and a detection system, where the separation system has a channel (1) and a first separation electrode (2) located at a first end of the channel (1) and a second separation electrode (3) located at the second end of the channel (1), where the separation system is arranged in such a way that a potential difference can be applied between the first and second separation electrode (2, 3), where the detection system, in use, is positioned close to the channel (1) or inside the channel (1), the system having means to reduce a voltage difference between the separation system and the detection system in order to prevent electrical breakthrough between the separation system and the detection system.

## Description

### FIELD OF THE INVENTION

The present invention relates to an electrophoretic system, comprising a separation system and a detection system, said separation system comprising a channel and a first separation electrode located at a first end of the channel and a second separation electrode located at a second end of the channel, said separation system being arranged in such a way that a potential difference can be applied between the first and second separation electrodes, said detection system, in use, being positioned close to channel or inside the channel.

### BACKGROUND

Electrophoretic techniques are commonly used to identify constituents in a sample, for example proteins or nucleic acids. The method is based on the fact that different molecules travel at different speeds through a medium, under influence of an electrical field applied to that medium. The difference in the velocities is caused by the different features of the different molecules, such as different masses, sizes, shapes, charges etc.

Capillary electrophoresis is a technique using electrophoresis in a channel, for instance a tube, filled with a conductive fluid. On one end of the channel a sample is located. When an electrical field is applied to the channel, preferably in the longitudinal direction of the channel, the constituents of the sample will travel through the channel. Such an electrical field can be established by, for instance, applying a positive electrode to the end of the channel where the sample is originally located and connecting the other end of the channel to ground.

Such an electrical field will also generate an electroosmotic flow. This electroosmotic flow is the movement of the liquid with respect to the electrical field. This flow is for instance directed to the exit of the channel at a low potential, e.g., ground.

The electrophoretic movement of the sample molecules through the liquid, in the example described above, is different for different molecules. A detection apparatus placed, for instance, at the end of the channel, or halfway, can successively detect the different constituents of which the sample is formed. First the positive molecules will reach the detection apparatus. These molecules are repelled by the positive electrode and are dragged along in the electroosmotic flow. Then the neutral elements will reach the detection apparatus. Those elements are not influenced by the electrical field, but are dragged along with the electroosmotic flow. Finally, the negative elements will reach the detection apparatus. Although the positive electrode attracts these elements, they are dragged along with the electroosmotic flow.

A problem that occurs with such electrophoretic systems is that as a result of the electrical field applied to the channel filled with the conductive liquid, the potential in the channel varies linearly through the channel and will only be near zero at the end of the grounded channel. The detection apparatus is located somewhere along the channel, preferably in the vicinity of the channel, or even in contact with the walls of the channel or even partly inside the channel. However, this detection apparatus doesn't necessarily have the same potential as the channel at the location of the detection apparatus and is preferably grounded. The detection and the separation systems do not have the same potential. As a result of this, a DC-current can arise between the channel and the detection apparatus or there is a risk of electrical breakthrough between the channel and the detection apparatus, causing undesired disturbances or damaging the system.

Known solutions to avoid such undesired DC-currents and/or spontaneous discharges are based on the isolation of the separation system and the detection system. This can for instance be done by using known isolation techniques or using an off-column detection apparatus, where the detection apparatus has no contact with the separation channel. However, these adjustments are not straightforward and require additional equipment.

US Patent 5.322.607 from Hewlett-Packard Company discloses an electrical potential configuration for a capillary electrophoretic system, in which the risk for such spontaneous discharges is minimised. This is done by providing the channel with a resistive layer (conductive coating) on its outside and applying two extra electrodes to this coating. The two extra electrodes adjust the potential of that resistive layer in such a way that the potential equals the potential of the detection apparatus at the position of the detection apparatus. However, this system has the disadvantage that complicated adjustments need to be made to the separation system. Such a compensation technique is not easily incorporated in existing systems.

Other known solutions attempt to solve the problem by isolating the separation system from the detection system, using for instance extra modules in order to pass on the detection signal to further process units without a DC-potential.

Another known solution is described in *Electronic protection methods for conductivity detectors in micro capillary electrophoresis devices,* by J. Bastemeijer et al, Sensors and Actuators B 83 (2002) 98 - 103, Elsevier. This document discloses a protection technique that uses a floating high voltage supply to generate an electrical field to the channel. The floating high voltage is biased in such a way that the DC level in the channel at the location of the detector should remain at about ground potential. As a result of that, the object is that no potential difference is present between the channel and the detection apparatus, so the risk of electrical breakthrough is minimised. However, this system has the disadvantage that such floating high voltage supplies are not easy available. Also, it is difficult to establish a well-defined ground level at the location of the detector by using a floating high voltage supply and, therefore, the risk of electrical breakthrough remains.

### SUMMARY OF THE INVENTION

The object of the present invention is to provide an electrophoretic system in which any current between the separation system and the detection system, and the risk of electrical breakthrough at the detection system is further reduced.

In order to obtain this object, the invention provides a system as defined in the outset, characterised in that the electrophoretic system comprises means to reduce a voltage difference between the separation system and the detection system in order to prevent electrical breakthrough between the separation system and the detection system, where said means to reduce said voltage difference comprise a DC-voltage source. This DC-voltage source is an easy to use device, that is also readily available. Such a system can establish a ground potential at the detection system in a well defined way. Moreover, because of the fact that the need for a floating high voltage supply is omitted, the system will be a much safer system to use and the systems integrity is ensured. Also, the fact that the separation voltage supply is grounded, simplifies the incorporation of the system with existing systems and reduces interface problems with the high voltage supply that would otherwise occur.

The electrophoretic system can further comprise at least one potential sensor provided close to the detection system, which controls the DC-voltage source. This makes it possible to monitor the potential in the channel and control the DC-voltage source.

The detection system can further comprise one or more electrodes and a first AC-voltage source where a conductivity of a liquid is determined by measuring parameters obtained from the electrodes. This allows for an electrical detection system.

The detection system can further comprise one or more electrodes that are in galvanic contact with the liquid. This makes it possible to use electrodes that do not have an insulating layer.

The electrophoretic system can further comprise a second AC-voltage source connected to the second separation electrode. This second AC-voltage can, for instance, be controlled by the first AC-voltage source, for instance via an amplifier. Such a second AC-voltage source will prevent leak-currents to flow from the detection system to the separation system.

### BRIEF DESCRIPTION OF THE DRAWINGS

The invention will be explained with reference to some drawings which are only intended to illustrate the present invention and not to limit its scope which is only limited by the appended claims.
Figure 1 shows an electrophoretic system according to a first embodiment of the present invention.
Figure 2 shows a preferred embodiment of the detection system according to the present invention.
Figure 3a shows a graph of the separation voltage through the electrophoretic system.
Figure 3b shows experimental results obtained using the set-up of figure 1 respectively figure 4.
Figure 4 shows an electrophoretic system according to a further aspect of the present invention.

### DESCRIPTION

For the purpose of teaching the invention, preferred embodiments of the method and devices of the invention are described in the sequel. It will be apparent for the person skilled in the art that other alternative and equivalent embodiments of the invention can be conceived and reduced to practice without departing from the true spirit of the invention, the scope of the invention being only limited by the annexed claims.

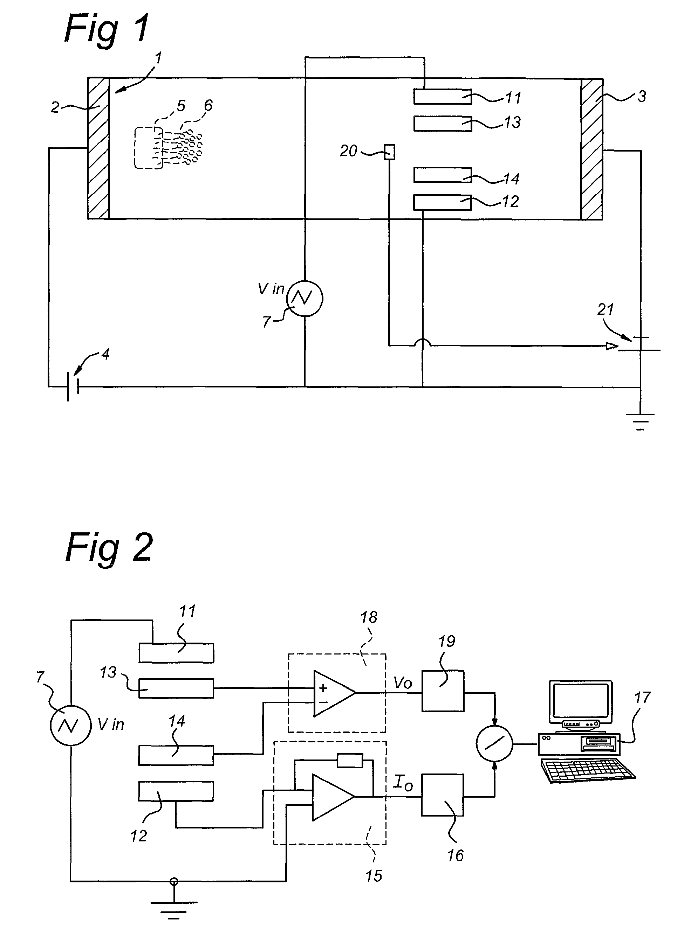

Fig. 1 shows an electrophoretic system according to the present invention, comprising a channel 1, for instance a tube, and two separation electrodes 2 and 3, where the first separation electrode 2 is positioned to a first end of the channel 1 and where the second separation electrode 3 is positioned to a second end of the channel 1. The channel 1 is preferably filled with a conductive liquid. A separation voltage Vₛₑₚ is maintained between the first and second separation electrodes 2 and 3 by a DC-source 4. The second separation electrode 3 is connected to ground via an extra DC-voltage source 21. The DC-source 4 will establish a potential difference between the first and second separation electrode 2, 3. This set-up will result in a substantially linear electrical field along the inside of the channel 1. The potential difference between the separation electrodes 2, 3 is preferably in the range from 1 kV to 50 kV.

Inside the channel 1, a detection system is positioned, comprising four detection electrodes 11, 12, 13, 14, of which the first detection electrode 11 is connected to an AC-voltage source 7. Close to these detection electrodes 11, 12, 13, 14, a sensor 20 is positioned, for instance, a sensing electrode.

When a sample 5 is placed in the channel, preferably close to the first separation electrode 2, the constituents 6 of that sample 5 will start to travel through the channel 1, due to the electrophoretic movement and the electroosmotic flow, both generated by the electrical field provided by the separation electrodes 2 and 3.

The detection system will detect the passage of the constituents by measuring the conductivity of the conductive liquid in between these detection electrodes 11, 12, 13, 14. The passage of the constituents will influence the conductivity of the conductive liquid. The circuitry used to measure this conductivity is shown in figure 2.

Figure 2 shows a more detailed view of this detection system. Vᵢₙ is preferably kept below 100 mV amplitude in order to avoid electrochemical reactions at the electrodes 11, 12, 13, 14.

The resulting current Iₒ between the two outer detection electrodes 11, 12 is measured with, for instance, a transimpedance amplifier 15 and applied to a computer system 17 via, for instance, a multimeter 19, e.g., a keithley 177. Of course, the resulting current Iₒ can be measured and applied to computer system 17 in many different ways, as is known to a person skilled in the art.

The resulting differential voltage Vₒ between the inner detection electrodes 13, 14 is measured using a high impedance differential-amplifier 18, for instance lock in amplifier 16, e.g., a Perkin-Elmer 7265. The measured voltage is applied to the computer system 17. Of course, the differential voltage Vₒ can be measured and applied to the computer system 17 in many different ways, as is known to a person skilled in the art.

The signals Iₒ and Vₒ are preferably converted into a digital format, in order to allow further processing by the computer system 17. The computer system 17 can compute and display the liquid conductivity from the ratio Iₒ/Vₒ. From this ratio information can be retrieved about the constituents 6 passing the detection system as a function of time.

In a preferred embodiment, the transimpedance amplifier 15 and the high impedance amplifier 18 are mounted together with the micromechanical measurement system on a printed circuit board. Preferably, the connections between the electronics and the detection electrodes are kept as short as possible in order to reduce parasitic capacitance's.

Of course, also other detection systems can be used. It is, for instance, possible to measure the conductivity of the liquid using two, three, or any other suitable amount of detection electrodes.

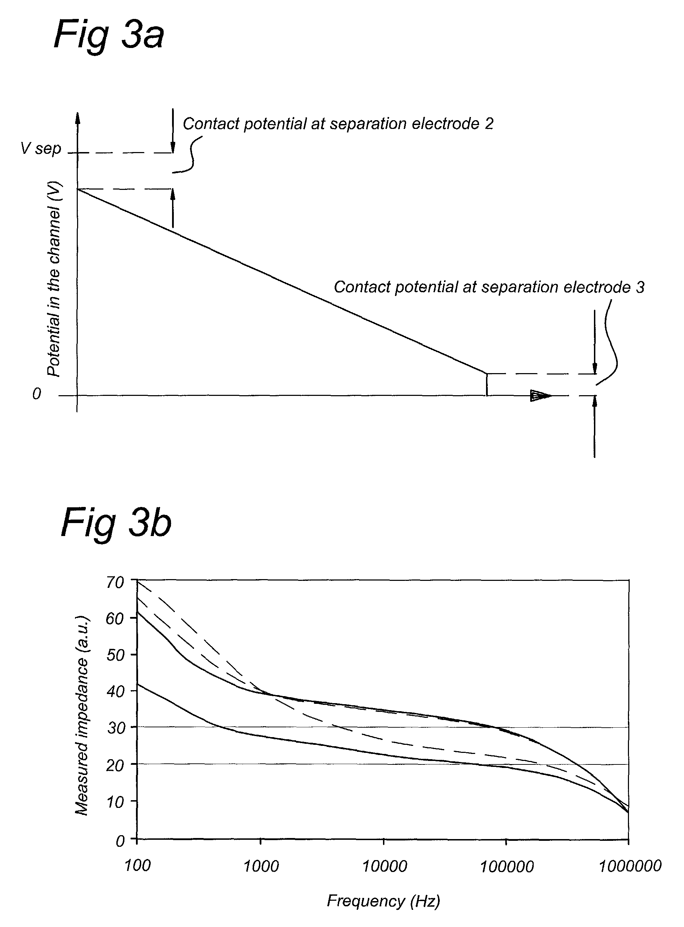

The separation voltage Vₛₑₚ is applied to the first and second separation electrodes 2 and 3. However, the total voltage difference inside the channel will be smaller than the applied Vₛₑₚ due to the presence of contact potentials at the separation electrodes 2 and 3. This is shown in figure 3a. So, when Vₛₑₚ is mentioned, one should realise that the actual voltage difference inside the channel is smaller than Vₛₑₚ.

However, the system of figure 1, as described so far, will suffer from the potential difference between the detection system with respect to the local potential of the channel 1 and the walls of the channel 1 due to the separation voltage Vₛₑₚ applied to the first and second separation electrode 2, and 3 by DC-source 4. The detection electrodes 11, 12, 13, 14 are protected with an insulating layer (not shown) made of, e.g., silicon carbide (SiC) which is, e.g., only 30 nm thick. When the separation voltage Vₛₑₚ is too high, the insulating layer will break down and a DC-path is created through the layer. This could cause undesired electrochemical reactions and gas formations at the interface between the insulating layer and the conductive liquid in the channel 1.

In order to minimise the potential difference between the detection system and the local potential of the separation system due to the separation voltage Vₛₑₚ, the extra DC-voltage source 21 is added in between the second separation electrode 3 and the ground. The voltage of this extra DC-voltage source 21 is such, that the potential in the detection system at the location of the detection electrodes 11, 12, 13, 14 is reduced to such a value that no electrical breakthrough occurs between the detection system fluid and any one of the electrodes 11, 12, 13, 14. Preferably, this value is substantially zero.

The DC-voltage source 21 may be controlled manually. However, in order to control the extra DC-voltage source 21, a sensor 20 is provided. This sensor 20 is located close to the four detection electrodes 11, 12, 13, 14, for instance, in a plane parallel to the first and second separation electrodes 2, 3, for instance 15 µm away from the detection electrodes 11, 12, 13, 14. Of course, the sensor 20 can be positioned at any suitable distance from the detection electrodes 11, 12, 13, 14. The sensor 20 is connected to the extra DC-voltage source 21, via a control system 10. Of course, the sensor 20 can be all kinds of sensors known to a person skilled in the art. It is also possible to use a plurality of sensors 20, where the end value is determined, based on the values measured by the different sensors 20. This can for instance be done by averaging the values measured by the plurality of sensors 20.

In a preferred embodiment, the sensor 20 has a galvanic contact with the conductive liquid and therefore can measure the DC-potential. The sensor controls the extra DC-voltage source 21 in such a way that the extra DC-voltage source 21 provides the second separation electrode 3 with a compensation voltage. This control has only been indicated very schematically in figure 1. There are several ways to implement such an electronically controlled adjustment of the voltage output of voltage source 21, as is known to persons skilled in the art. There is no restriction in the implementation of the electronically controlled voltage source embodiment. For instance, when sensor 20 measures a local voltage Vₘₑₐₛ the extra DC-voltage source 21 provides the second separation electrode 3 with a compensation voltage V_{comp} that is almost equal to minus Vₘₑₐₛ. The DC-voltage of the separation system fluid at the location of the detection system will become close to zero.

The compensation technique described above, makes it also possible to use detection electrodes 11, 12, 13, 14, that are in galvanic contact with the conductive liquid. This is only possible when the potential difference between the detection system and the separation system is very small. So, the dimensions of the detection electrodes 11, 12, 13, 14 need to be relatively small and the amplitude of Vᵢₙ should also be relatively small, as will readily be understood by a person skilled in the art.

As a result of the constant monitoring and compensation of the potential at the second separation electrode 3, the exact potential of the second separation electrode 3 is not exactly known. For this reason, in another embodiment, sensor 20 is omitted, and extra DC-voltage source 21 is not controlled using the actual measured potential at the location of the detection system, but an estimated value of the potential at the location of the detection system is applied to the extra DC-voltage source 21.

However, the error in the potential of the second separation electrode 3 due to the compensation will in general be small compared to the error in the potential of the second separation electrode 3 due to the DC-source 4. The extra error, due to the compensation, can be accounted for using an extra feedback system, known to a person skilled in the art.

The set-up discussed above makes it possible to use a detection system, which is in contact with, or located close to the channel 1, without the risks discussed above. In the example discussed, the potential of the second separation electrode 3 is compensated, but compensation can also be applied to the first separation electrode 2 or both the first and second separation electrode 2, 3.

Of course, the compensation system described can be used in all sorts of electrophoretic systems, using all sorts of detection methods and/or systems, known to a person skilled in the art. The compensation technique can be used for all kinds of detection systems placed inside or outside the channel 1, in contact with the walls of the channel 1 or not in contact with the walls of the channel 1.

Figure 3b shows experimental results obtained with the set-up according to the set-up shown in figure 1 (dashed lines). Frequency responses of the detection apparatus measured with the apparatus shown in figure 2 are depicted in the frequency range from 100 Hz- 100 kHz, using solutions of 2 and 20 mM Mes/HIS(pH 6) for the separation fluid. The separation voltage Vₛₑₚ was approximately 600 Volts and the compensation voltage V_{comp} applied to the second separation electrode 3 with voltage source 21 was approximately -1 Volt.

Figure 3b shows the measured impedance as a function of the frequency of Vᵢₙ applied to the detection electrodes 11, 12, 13, 14. These results were obtained, without disturbing influences of a DC-current flowing between the detection system and the separation system. Also, spontaneous discharges did not occur during the experiments.

For frequencies substantially higher than 1 kHz, the curve for the 2mM solution is higher than for the 20 mM solution. However, as is clearly visible, the ratio between the measured impedances is not a constant as a function of the frequency, and below approximately 1 kHz, the response is reversed. The reason for this will be discussed below.

The four detection electrodes 11, 12, 13, 14 are preferably located close to the second separation electrode 3, because the separation of the constituents of sample 5 is better further away from the first separation electrode 2. However, due to the introduced potential difference between the first detection electrode 11 and the second separation electrode 3, an AC-leak-current can develop between the first detection electrode 11, which is connected to the AC-voltage source 7 and the second separation electrode 3.

This leak-current particularly occurs at low frequencies. At low frequencies, the impedance of the detection electrodes 11, 12, 13, 14 is very high, because the insulating layers made of silicon carbide (SiC) behave as a capacitor with a high impedance at low frequencies. This will readily be understood by a person skilled in the art.

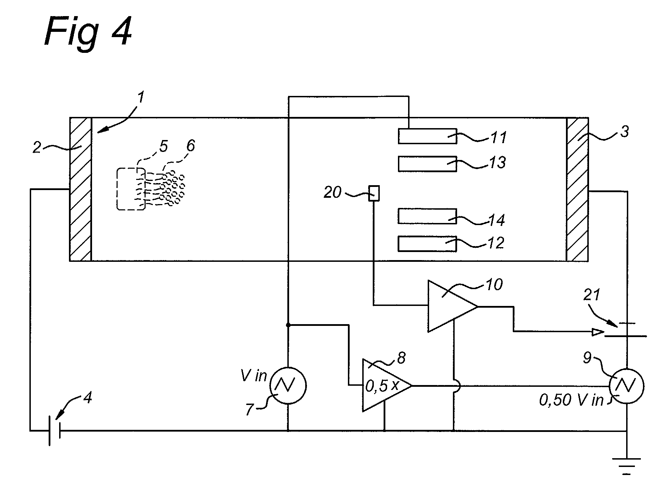

Figure 4 shows a further embodiment, in which the problem of AC-leak-currents has been reduced, by applying an AC-voltage produced by further AC-voltage source 7 to the second separation electrode 3 and synchronised with AC-voltage Vᵢₙand, in this example, an amplitude of 0,5 x Vᵢₙ. This can be implemented by the set-up of figure 4 where the further AC-voltage source 9 is located between the second separation electrode 3 and voltage source 21 and synchronised with AC-voltage Vᵢₙ by means of an output signal received from an amplifier 8 connected to the voltage source 7. Same reference numbers are used to denote the same parts as in figure 1. Further AC-voltage 9 reduces the AC-potential difference between the first detection electrode 11 and the second separation electrode 3, preventing an AC-leak-current to flow between the first detection electrode 11 and the second separation electrode 3. Further AC-voltage source 9 can be controlled in such a way that the potential difference between the detection system and the separation system at the location of the detection system for AC is decreased. This can be done, for instance, by using a feedback system (not shown), as is known to a person skilled in the art.

In the embodiment shown, the amplifier 8 has an amplification factor of 0,5 , so effectively functions as an attenuator. However, depending on the exact purposes and circumstances, other amplification factors can be used. Amplifier 8 can be all sorts of amplifiers known to a person skilled in the art.

Figure 3b shows the results obtained for the same experiments as discussed above (full lines), but now performed with the set-up according to figure 4. The top and bottom line correspond, respectively, to the 2 and 20 mM concentration. The ratio between the two responses is substantially constant over the usable frequency range.

## Claims

1. Electrophoretic system comprising a separation system and a detection system, said separation system comprising a channel (1) and a first separation electrode (2) located at a first end of the channel (1) and a second separation electrode (3) located at a second end of the channel (1),
said separation system being arranged in such a way that a potential difference can be applied between the first and second separation electrodes (2, 3),
said detection system, in use, being positioned close to channel (1) or inside the channel (1)
**characterised in that**
the electrophorctic system comprises means to reduce a voltage difference between the separation system and the detection system in order to prevent electrical breakthrough between the separation system and the detection system, where said means to reduce said voltage difference comprise a DC-voltage source (21).

2. Electrophoretic system according to claim 1, **characterised in that** at least one potential sensor (20) is provided located close to the detection system, which controls the DC-voltage source (21).

3. Electrophoretic system according to any of the preceding claims,
**characterised in that** the detection system comprises one or more electrodes (11, 12, 13, 14) and a first AC-voltage source (7) and a conductivity of a liquid is determined by measuring parameters obtained from the electrodes (11, 12, 13, 14).

4. Electrophoretic system according to any of the preceding claims, **characterised in that** the detection system comprises four electrodes (11, 12, 13, 14) having two outer electrodes (11, 12) and a first AC-voltage source (7) connected to the two outer detection electrodes (11, 12) and a conductivity of a liquid in said channel (1) is determined by measuring parameters obtained from the electrodes (11, 12, 13, 14).

5. Electrophoretic system according to claim 3 or 4, **characterised in that** the one or more electrodes (11, 12, 13, 14) are in galvanic contact with the liquid.

6. Electrophoretic system according to claim 3, 4 or 5, **characterised in that** a second AC-voltage source (9) is connected to the second separation electrode 3.

7. Electrophoretic system according to claim 6, **characterised in that** the second AC-voltage source (9) is controlled by the first AC-voltage source (7).

8. Electrophoretic system according to claim 7, **characterised in that** said first AC-voltage source (7) is connected to said second AC-voltage source (9) via an amplifier (8).

9. Electrophoretic system according to claim 8, **characterised in that** said amplifier (8) has an amplification factor equal to or smaller than 1.
